(19) Europäisches Patentamt
European Patent Office
Office européen des brevets

(11) **EP 1 046 571 B1**

(12) **EUROPÄISCHE PATENTSCHRIFT**

(45) Veröffentlichungstag und Bekanntmachung des Hinweises auf die Patenterteilung:
**31.08.2005   Patentblatt 2005/35**

(51) Int Cl.7: **B62D 6/00**, B60T 7/12

(21) Anmeldenummer: **00107259.4**

(22) Anmeldetag: **03.04.2000**

(54) **Verfahren zur Reduktion der Kippgefahr von Strassenfahrzeugen**

Method for avoiding roll-over of road vehicles

Procédé pour éviter le basculement des véhicules routiers

(84) Benannte Vertragsstaaten:
**AT BE CH CY DE DK ES FI FR GB GR IE IT LI LU MC NL PT SE**

(30) Priorität: **23.04.1999   DE 19918597**

(43) Veröffentlichungstag der Anmeldung:
**25.10.2000   Patentblatt 2000/43**

(73) Patentinhaber: **DLR Deutsches Zentrum für Luft- und Raumfahrt e.V.**
**51147 Köln (DE)**

(72) Erfinder:
• **Odenthal, Dirk**
**80689 München (DE)**
• **Bünte, Tilmann**
**82205 Gilching (DE)**

(74) Vertreter: **von Bülow, Tam**
**Patentanwalt,**
**Mailänder Strasse 13**
**81545 München (DE)**

(56) Entgegenhaltungen:
**DE-A- 4 010 332        DE-A- 4 031 317**
**DE-A- 19 623 595        DE-C- 19 602 879**

**Beschreibung**

1. Technischer Hintergrund

Die Erfindung betrifft ein Verfahren zur Reduktion der Kippgefahr von Straßenfahrzeugen.

Fahrsituationen, die direkt oder indirekt zu einem Umkippen von Straßenfahrzeugen führen können, sind beispielsweise eine zu schnelle Einfahrt in eine Kurve, Ausweich- bzw. Spurwechselmanöver ("Elchtest"), Beschleunigen oder Bremsen in der Kurve und Störeinflüsse, wie böiger Seitenwind oder unterschiedlich griffiger Fahrbahnbelag unter den rechten bzw. linken Rädern beim Bremsen ("μ-split-Bremsung"). "Direkt" bedeutet in diesem Zusammenhang, daß die Ursache des Kippens das Fahrmanöver selbst ist. Im Gegensatz dazu heißt "indirekt", daß beispielsweise das Fahrzeug durch das Fahrmanöver zunächst ins Schleudern gerät, das Kippen aber erst durch Auftreffen der Räder auf ein Hindernis (z.B. Bordstein) verursacht wird.

Fahrzeuge mit hohem Schwerpunkt sind besonders kippgefährdet. Auch resultieren Kippunfälle häufig aus einer Fehleinschätzung der Fahrdynamik seitens des Fahrers bei stark variierender beladungsabhängiger Schwerpunkthöhe insbesondere bei Nutzfahrzeugen.

2. Stand der Technik

Zur Reduktion der Kippgefahr existieren bereits bekannte und in den Markt eingeführte Technologien, wie die aktive Federung und Dämpfung des Aufbaus oder Fahrdynamikregelungssysteme, wie die Einzelradbremsung mit unterlagerter Antiblockier- und Antischlupfregelung.

2.1 (Semi-)Aktive Federung und Dämpfung

Ein naheliegender Weg, um eine Reduktion der Kippgefahr zu erzielen, ist der, direkt in die Wankdynamik einzugreifen. Die reine Versteifung der Sekundärfederung und Verstärken der Dämpfung resultiert in schlechtem Fahrkomfort. Deswegen werden in Fahrzeuge Stabilisatoren eingebaut, die gezielt die Wankbewegung federn und ggf. bedämpfen. Dies kann semiaktiv oder aktiv erfolgen.

Bei semi-aktiven Systemen erfolgt kein Energieeintrag durch Aktuatoren. Durch semi-aktive Auslegung der Sekundärfederung bzw. Dämpfung eines Fahrzeugs kann dessen Wankdynamik beeinflußt werden, indem beispielsweise die Wankdämpfung in Abhängigkeit der Wankrate bzw. -beschleunigung eingestellt wird.

Bei aktiven Systemen wird die Reaktion auf eine Kraftänderung durch in Abhängigkeit von fahrdynamischen Größen elektronisch geregelte hydraulische oder pneumatische Aktuatoren unterstützt. Beispielsweise wird in der DE 197 55 344 A1 eine Vorrichtung zur Reduktion der Wankbewegung eines (Nutz-) Fahrzeugs beschrieben, bei der durch Zentrifugalkräfte verursachte Wankbewegungen durch Luftfederung reduziert werden. In Abhängigkeit der gemessenen Querbeschleunigung wird dabei Druckluft aus einem Luftbehälter den Luftfedern zugeführt und damit aktiv gefedert bzw. gedämpft.

2.2 ABS und ESP

Bei Antiblockierregelsystemen (ABS) und bestehenden Fahrdynamikregelungssystemen, wie z.B. dem elektronischen Stabilitätsprogramm (ESP) von Bosch (vgl. ATZ Automobiltechnische Zeitschrift 96 (1994) 11, S. 674-688), wird in längs-, quer- und gierdynamisch kritischen Situationen in die Fahrdynamik in der Weise stabilisierend eingegriffen, so daß das Fahrzeug vom Fahrer möglichst in gewohnter Weise handhabbar bleibt. Damit wird eine Stabilisierung des Fahrzustandes erreicht und auch eine Reduktion der indirekt durch kritische Fahrsituationen induzierten Kippgefahr.

In der DE 196 02 879 C1 wird ein Fahrdynamik-Regelungsverfahren und eine entsprechende Vorrichtung für (Nutz-) Fahrzeuge, insbesondere Sattelschlepper, beschrieben, die anhand einer Messung der Querbeschleunigung einen schwachen Bremseingriff startet und überwacht, ob ein ABS-Regeleingriff stattfindet, was als Abheben eines Rades und somit Abnahme der Kippstabilität des Fahrzeugs in einer Kurvenfahrt interpretiert wird. In diesem Fall wird ein Lenkeingriff eingeleitet.

Ähnlich wird in der DE 21 33 547 C2 bei Fahrzeugen mit kurzem Radstand davon ausgegangen, daß es bei starkem Abbremsen dazu kommen kann, daß die Hinterräder die Bodenhaftung verlieren. In diesem Fall spricht das ABS an den Hinterrädern an und reduziert dort den Bremsdruck auf den Wert Null. Haben die Hinterräder daraufhin innerhalb einer vorgegebenen Wartezeit nicht wieder auf Fahrzeuggeschwindigkeit hochbeschleunigt, so wird der Bremsdruck an den Vorderrädern reduziert, um ein Umkippen über die Vorderachse ("Kopfstand") zu vermeiden.

Bei Fahrdynamikregelungssystemen, die auf der Einzelradbremsung bzw. dem Beschleunigen einzelner Antriebsräder basieren (ESP), werden durch gezielte Änderung des Längsschlupfes anhand der unterlagerten Brems- und Antriebsschlupfregelung die Längskräfte an den verschiedenen Rädern eingestellt, um damit indirekt die Querkräfte zu beeinflussen. Dadurch wird es möglich, ein Gierstörmoment durch ein entgegengerichtetes Giermoment zu kompensieren. Der Quer- und Gierstabilisierung wird dabei Priorität gegenüber der Längsstabilisierung eingeräumt. Wenn beispielsweise beim Bremsen zwischen den linken bzw. rechten Rädern und der Straße unterschiedlicher Kraftschluß besteht (μ-split), werden auf der Seite mit höherem Kraftschluß die Bremskräfte so reduziert, daß sie denen auf der Seite mit niedrigerem Kraftschluß entsprechen. Dadurch wird in bestimmten Situationen die Quer- und Gierdynamik auf Kosten einer geringeren Gesamtbremskraft, also eines größeren Bremsweges stabilisiert. Dieses System wird bereits in Serie von mehreren Automobilherstellern ausgeliefert.

Im U. S. Pat. No. 5,825,284 wird ein Verfahren für die Erkennung eines kippkritischen Fahrzustands beschrieben, bei dem über einen Mikroprozessor unter anderem die Schwerpunkthöhe und die laterale Verteilung der Reifenaufstandskräfte durch Verarbeiten geeigneter Signale berechnet und als Signal zur Verfügung gestellt werden können. Es erfolgt aber lediglich eine Warn-Information an den Fahrer, der dann sein Fahrverhalten anzupassen hat.

Im Falle einer Querneigung der Straße ist es erforderlich, die Meßsignale entsprechend anzupassen. In den DE 196 15 311 A1 und DE 197 49 058 A1 wird ein Verfahren und eine Vorrichtung beschrieben, die eine Bestimmung der von der Fahrbahnquerneigung abhängigen Bewegungsgrößen, beispielsweise der Querbeschleunigungskomponente, ermöglicht. Die Kenntnis dieser Größe ist für die Ermittlung der Kippgrenze bei Fahrbahnquerneigung erforderlich.

### 2.3 Aktiver Bremseingriff

Beim Bremsassistenten, wie er beispielsweise in dem Buch "Fahrsicherheitssysteme" (S. 221-223), herausgegeben von der Robert Bosch GmbH, beschrieben wird, wird über ein Hydraulikaggregat aktiv der Bremsdruck verstärkt. Dabei wird der Bremswunsch des Fahrers (Fußkraft auf Bremspedal) aufgenommen und die Meßwerte an das Steuergerät übermittelt. Der Bremsassistent hat die Aufgabe, eine Panikbremssituation zu erkennen und aktiv den Bremsdruck bis zur Blockiergrenze zu erhöhen (und schließlich das Ende der Panikreaktion zu erkennen). Das unterlagerte ABS regelt dann den Bremsdruck an den einzelnen Rädern. Bei Nutzfahrzeugen werden darüber hinaus u.a. auch automatisch lastabhängige Bremskraftregelungssysteme (S. 191-193) eingesetzt, um, abhängig vom Beladungszustand, die Bremskraftverteilung auf die einzelnen Fahrzeugachsen zu regeln.

Bei der DE 40 10 332 A1 werden die Giergeschwindigkeit oder die Querbeschleunigung gemessen und koordiniert die Lenkung und die Bremsen entsprechend einer erfaßten Giergeschwindigkeits- oder Querbeschleunigungsabweichung geregelt. Aus der Fahrgeschwindigkeit und dem Lenkradwinkel werden eine Soll-Giergeschwindigkeit oder eine Soll-Querbeschleunigung berechnet. In Fällen, bei denen die Abweichung zwischen Soll- und Ist-Wert innerhalb vorbestimmter Grenzen liegt, kann auch nur in die Lenkung oder nur in die Bremse eingegriffen werden.

### 2.4 Aktiver Lenkeingriff

Bei konventionell gelenkten Fahrzeugen besteht ein festes Verhältnis zwischen Lenkradeinschlag und dem Lenkwinkel der gelenkten Räder, bei konventioneller Vorderradlenkung demnach den Vorderradlenkwinkel. Mittels einer aktiven Lenkung kann zusätzlich zu dem vom Fahrer aufgebrachten Lenkradwinkel $\delta_L$ ein Zusatzlenkwinkel $\delta_C$ gestellt werden. Der Fahrzustand wird durch geeignete Sensorik erfaßt und über ein Regelgesetz und einen Lenkaktuator zur Erzeugung des Zusatzlenkwinkels verwendet (vgl. DE 42 06 654 C2 und DE 43 07 420 C1).

Beim aktiven Lenken, das sich entweder durch ein "steer-by-wire-System" oder eine "mechanische Additionslenkung" realisieren läßt, wird über aktives Eingreifen in die Vorderradlenkung (ggf. auch Hinterradlenkung) eine Stabilisierung der Quer- und Gierdynamik herbeigeführt (vgl.

DE 40 28 320 C2). In Versuchsfahrzeugen wie auch in der Literatur wurden steer-by-wire-Systeme und mechanische Additionslenkungen bereits untersucht, sind aber bei Fahrzeugherstellern noch im Entwicklungsstadium.

In dem Aufsatz "Adaptive Steering" von Kasselmann und Keranen im Bendix Technical Journal S. 26-35,1969 wird eine in ein Versuchsfahrzeug integrierte mechanische Additionslenkung beschrieben, bei der ein hydraulisches Stellglied eingesetzt wurde, um über eine seitliche Verschiebung des Lenkgetriebes einen Zusatzlenkwinkel zu dem über das Lenkrad aufgebrachten Lenkwinkel zu stellen. Ein weiteres Prinzip einer Additionslenkung wurde auf dem XXIV Fisita Kongreß in Prag 1996 von Krämer und Hackl in dem Beitrag "Potential Functions and Benefits of Electronic Steering Assistance" vorgestellt, bei dem der Zusatzlenkwinkel mechanisch durch eine Relativwerdrehung der geteilten Lenksäule mittels eines elektromotorisch angetriebenen Planetengetriebes erzeugt wird.

In der EP-A-916 568 (Stand der Technik nach Art 54(3)EPÜ) mit der Bezeichnung "Aktuator zum Erzeugen eines zusätzlichen Lenkwinkels für Straßenfahrzeuge" werden verschiedene Ausführungsformen einer Additionslenkung beschrieben, bei denen als Aktuator zum Aufbringen des Zusatzlenkwinkels eine elektromotorisch angetriebene Planeten-Wälz-Gewinde-Spindel zum Einsatz kommt.

Alle bekannten Additionslenkungen wurden bisher aber nicht im Zusammenhang mit einem Verhindern des Umkippens von Fahrzeugen eingesetzt bzw. untersucht.

2.5 Sensorik

Sensoren, wie ABS-Sensoren (Raddrehzahlgeber, Druckgeber, etc.), Drehratensensoren (Wankrate), Winkelsensoren (Lenkwinkel), Wegsensoren (zur Bestimmung der Einfederwege des Wankaufbaus und des Wankwinkels zwischen Fahrzeugaufbau und Fahrwerk), Beschleunigungssensoren (Längs- und Querbeschleunigung) sind handelsüblich und werden bereits im Fahrzeugbau eingesetzt.

Die Wankrate eines Fahrzeuges kann mit einem Drehratensensor gemessen werden, wie er heute beispielsweise handelsüblich in mikromechanischer Bauweise von Bosch (siehe VDI Nachrichten, 10.07.1998, "Elektronik ersetzt im Auto zunehmend die Mechanik" bzw. Bosch Research Info Ausgabe 1/1998) oder Temic (Sensor DRZ-75x, siehe VDE/VDI GMM Mitgliederinformation, Ausgabe Nr. 4, November 1998) erhältlich ist.

Bei Antiblockierregelsystemen wird für jedes Rad ein Drehzahlfühler eingesetzt, damit an jedem Rad die Drehzahl bestimmt werden kann. Aus diesen Größen kann auch die Fahrgeschwindigkeit ermittelt werden.

Zur Bestimmung der Schwerpunkthöhe eines Fahrzeuges kann ein Online-Schätzverfahren, wie es beispielsweise in einem Aufsatz von S. Germann und R. Isermann ("Determination of the centre of gravity height of a vehicle with parameter estimation") beschrieben wird, oder ein Offline-Verfahren (s. z.B. L. Ljung, "System Identification...") eingesetzt werden.

Offline-Schätzverfahren zum Bestimmen der Schwerpunkthöhe eines Fahrzeuges, d. h. aus der Parameteridentifikation bekannte Verfahren, sind beispielsweise in dem Buch "System Identifikation: Theory for the User", Prentice-Hall, Inc., Englewood Cliffs, New Jersey von Lennart Ljung oder in einem Aufsatz von St. Germann und R. Isermann "Determination of the centre of gravity height of a vehicle with parameter estimation" 10th IFAC Symposion on System Identifikation Copenhagen 4.-6.7.1994, beschrieben.

Die DE 43 13 198 C2 beschreibt ein weiteres Verfahren, mit dem während eines Anfahr-, Roll- und Bremszyklus die Masse und die Schwerpunktlage eines Zugfahrzeuges und eines Anhängers bestimmt werden können, wobei nur die bei modernen Fahrzeugen ohnehin vorhandenen Sensoren benötigt werden.

3. Nachteile des Standes der Technik

Eine aktive Federung und Dämpfung des Fahrzeugaufbaus ist aufgrund des hohen Energie- und Aktuatorikaufwands und der damit verbundenen Kosten bislang nur bei Kleinfahrzeugen mit ausgefeilter Kinematik und nur begrenzt im Nutzfahrzeugbereich über Luftfederung wirtschaftlich realisierbar. Eine Reduktion der Zentripetalbeschleunigung ist mit diesem Eingriff nicht möglich. Der kippstabile Bereich der Fahrzustände läßt sich damit zwar vergrößern, ein Umkippen kann jedoch nicht ausgeschlossen werden.

Die Längskraftregelung einzelner Räder ist primär geeignet für eine Längs-, Quer-, Gier- und Nickstabilisierung von Straßenfahrzeugen. Die Beeinflussung der Wankdynamik mit diesem Verfahren kann aber nur indirekt über die Längsdynamik erfolgen und ist deswegen weniger effektiv. Zudem gestatten Energie-, Verschleiß- und Komfortüberlegungen keinen Einsatz der gezielten Bremseingriffe an einzelnen Rädern im Dauerbetrieb sondern lediglich als Notfallsystem. Damit scheidet eine kontinuierliche Verbesserung der Wankdynamik hierdurch aus.

4. Aufgabe, Lösung und Vorteile der Erfindung

Aufgabe der Erfindung ist es, ein Verfahren anzugeben, mit dem die Kippgefahr eines Fahrzeuges wesentlich verringert wird.

Diese Aufgabe wird durch die im Patentanspruch 1 angegebenen Merkmale gelöst. Weitere Ausgestaltungen der Erfindung sind den Unteransprüchen zu entnehmen.

Das Grundprinzip der Erfindung besteht darin, fahrdynamische Größen und Fahrzeugparameter zu messen bzw. aus Meßgrößen und bekannten Parametern zu bestimmen und daraus ein Kippkoeffizientsignal zu bilden, das einem Regelkreis für eine Lenkaktuatorik zugeführt wird, wodurch der Kippgefahr entgegengewirkt wird. Zusätzlich kann über den Regelkreis auch eine Bremsaktuatorik angesteuert werden. Die Regelung kann auch schon vor Erreichen kippkritischer Zustände einsetzen und dadurch eine Verbesserung der Wankdämpfung erreichen.

Das Gesamtsystem des kippstabilisierten Fahrzeugs besteht aus der Regelstrecke, das ist das Fahrzeug, Sensoren zur Messung der Fahrzustandsgrößen, Aktuatoren, mit denen der Vorderradlenkwinkel und ggf. zusätzlich die Bremskraft beeinflußt werden sowie dem fahrdynamischen Regelungssystem, das aus einem Notfall-Lenkregler, einem Notfall-Bremsdruckregler mit unterlagertem ABS-Regler und einem kontinuierlich betriebenen Lenkregler besteht.

Die für eine technische Umsetzung des erfindungsgemäßen Verfahrens erforderlichen Komponenten, Sensoren und Aktuatoren für ein aktives Eingreifen in die Lenkung und in die Bremsen, sind im Stand der Technik vorhanden.

Das Schätzen der Schwerpunkthöhe erfolgt sinnvollerweise zu Beginn einer jeden Fahrt. Danach sind keine Beladungsänderungen mehr zu erwarten. Da diese Schätzung nicht zeitkritisch ist, können neben Online-Schätzverfahren auch Offline-Schätzverfahren, wie in Abschnitt 2.5 beschrieben, eingesetzt werden.

5. Beschreibung eines Ausführungsbeispieles

Im folgenden wird die Erfindung anhand eines Ausführungsbeispiels im Zusammenhang mit Zeichnungen ausführlich erläutert. Es zeigt:

Fig. 1     eine schematische und stark vereinfachte Darstellung der Vorderansicht eines Fahrzeuges für die Beschreibung eines Kippkoeffizienten;

Fig. 2     ein Blockschaltbild zur Beschreibung der erfindungsgemäßen Notfall-Lenkregelung;

Fig. 3     ein Blockschaltbild zur Beschreibung des erfindungsgemäßen Notfall-Systems, bestehend aus Notfall-Lenkregelung und Notfall-Bremsdruckregelung;

Fig. 4     ein Blockschaltbild zur Beschreibung des erfindungsgemäßen Lenkregelungssystems bestehend aus Notfall-Lenkregelung und kontinuierlich betriebener Lenkregelung;

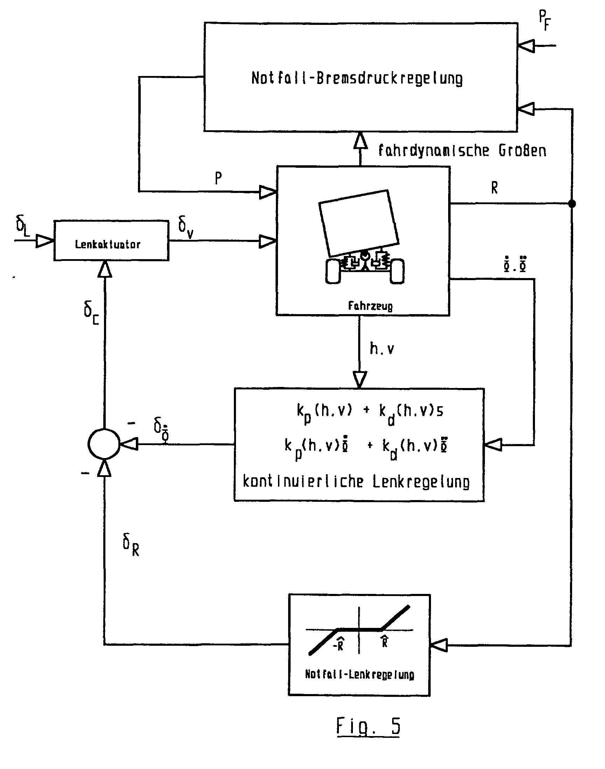

Fig. 5     ein Blockschaltbild zur Beschreibung des erfindungsgemäßen Gesamt-Regelungssystems bestehend aus Notfall-System und kontinuierlich betriebener Lenkregelung;

Fig. 6     ein Blockschaltbild, in dem die für die Regelungstechnik wesentlichen Größen einer mechanischen Additionslenkung beschrieben werden;

Fig. 7     ein Blockschaltbild, in dem die für die Regelungstechnik wesentlichen Größen eines steer-by-wire Lenksystems beschrieben werden; und

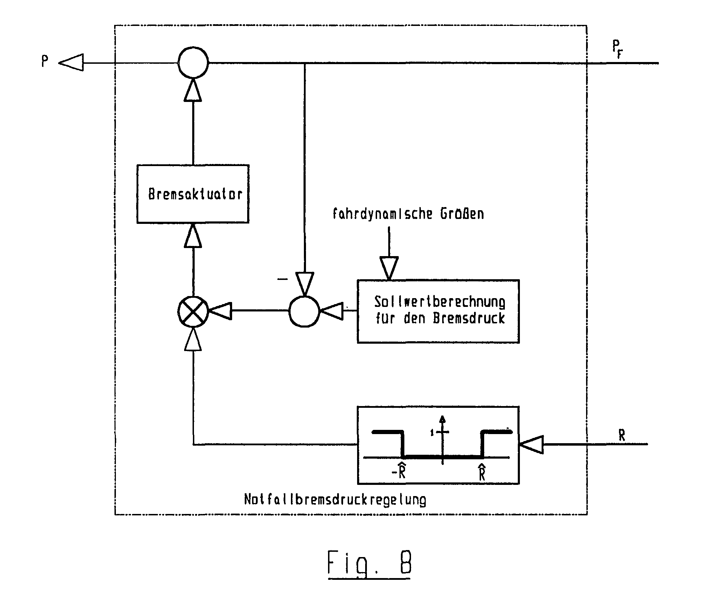

Fig. 8     ein Blockschaltbild, in dem schematisch das Notfall-Bremsdruckregelungssystem beschrieben wird.

5.1 Kippkoeffizient

Wesentlicher Einflußparameter für eine Kippgefährdung des Fahrzeugs ist das Verhältnis von Schwerpunkthöhe und Spurweite. Diese Aussage wird von Ergebnissen der statistischen Auswertung von Unfällen mit Kippbeteiligung untermauert und soll im folgenden anhand der Definition eines Kippkoeffizienten begründet werden.

Für eine quantitative Beurteilung der Kippgefahr ist die Einführung des Kippkoeffizienten R sinnvoll, der sich aus einigen grundlegenden physikalischen Überlegungen anhand eines sich in stationärer Kurvenfahrt befindenden Fahrzeugs ableiten läßt. Eine Kippgefahr läßt sich durch die Ungleichung IR|<1 formulieren.

Der Kippkoeffizient R, der angibt wie nahe sich ein Fahrzeug an der Kippgrenze befindet, wird während der Fahrt aus Meßsignalen und geschätzten Fahrzeugparametern ständig ermittelt. Überschreitet der Kippkoeffizient einen vorgegebenen Grenzwert, so wird ein Notfallsystem aktiviert und der Kippkoeffizient wird dazu verwendet, um über ein nichtlineares Regelgesetz und einen Lenkaktuator einen Zusatzlenkwinkel zusätzlich zu dem vom Fahrer am Lenkrad aufgebrachten Lenkwinkel zu erzeugen. Für die Bestimmung des Kippkoeffizienten können beispielsweise die gemessenen/geschätzten/beobachteten dynamischen Reifenaufstandskräfte vorne links $F_{z,lv}$ bzw. rechts $F_{z,rv}$ und hinten links $F_{z,lh}$ bzw. rechts $F_{z,rh}$ herangezogen werden. Eine andere Möglichkeit besteht darin, dafür das geschätzte/beobachtete dynamische Wankmoment zu verwenden oder die gemessene/geschätzte/beobachtete Wankwinkelgeschwindigkeit und Wankwinkelbeschleunigung. Außerdem kann der Kippkoeffizient aus Gl. (2) aus bekannten Fahrzeugparametern $m_u, T, h_R$ und zu Beginn einer jeden Fahrt geschätztem $h_R$ und gemessenem $m_s$ ermittelt werden. Hieraus sind sämtliche Kombinationen von Vereinfachungen möglich. Z. B. kann $R_{approx}$ nach G1. (3) verwendet werden. Die Querbeschleunigung im Aufbauschwerpunkt kann dabei beispielsweise aus Interpolation der Signale ermittelt werden, die durch zwei am Dach bzw. Boden des Fahrzeugaufbaus befestigte Querbeschleunigungssensoren (bereinigt vom Anteil der Gravitationsbeschleunigung) gemessen werden, wobei gleichzeitig die Information der geschätzten Höhe des Aufbauschwerpunkts über der Wankachse $h_R$ einfließt. Eine andere Möglichkeit besteht darin, die Querbeschleunigung $a_{y,u}$ durch einen am Fahrwerk befestigten Querbeschleunigungssensor zu messen und die Wankbeschleunigung durch numerisches Differenzieren (Filtern) eines mit einem Drehratensensor aufgenommenen Wankwinkelgeschwindigkeitssignal zu ermitteln. Dann gilt, wenn man den Einfluß von Hub- und Nickdynamik und nichtlineare Effekte vernachlässigt, näherungsweise $a_{y,s} = a_{y,u} - \ddot{h}\varphi$. Als Näherung kann auch $R_{approx,2} = 2h_{SP}/T\,a_{y,SP}/g$ verwendet werden, wobei $h_{y,SP}$ die Gesamtschwerpunkthöhe des Fahrzeuges und $a_{y,SP}$ die Querbeschleunigung im Gesamtschwerpunkt ist. Dies erfordert das Schätzen der Höhe des Gesamtschwerpunkts anstelle der SP-Höhe des Wankaufbaus über der Wankachse.

Beim Überschreiten des Grenzwertes wird gleichzeitig die Notfall-Bremsdruckregelung aktiviert, um die Geschwindigkeit des Fahrzeugs über einen Eingriff in die Bremsaktuatorik zu reduzieren.

Dem Notfallsystem unterlagert ist ein aktiver Lenkeingriff im Dauerbetrieb zur Verbesserung der Wankdämpfung und damit der Kippstabilisierung in dynamischen Fahrmanövern.

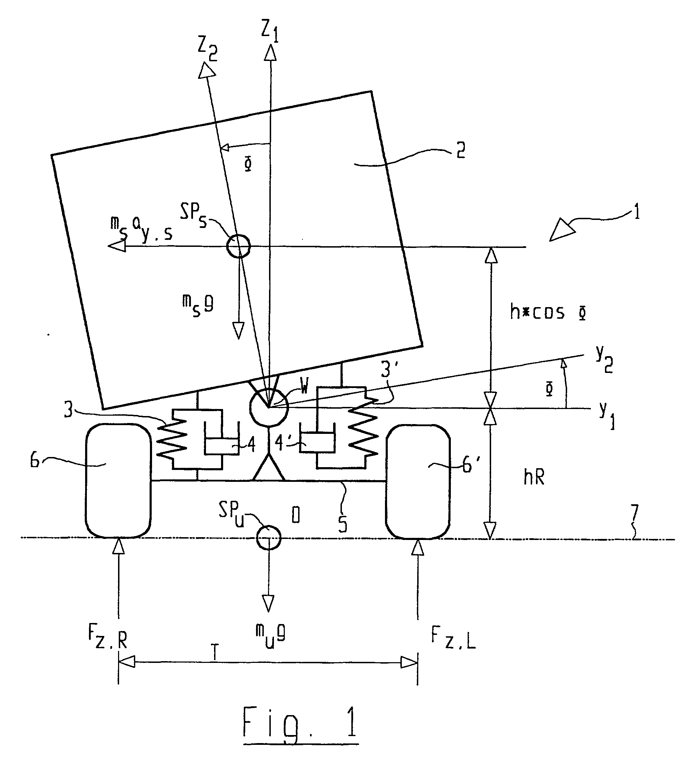

Fig. 1 zeigt hierzu die vereinfachte Schnittdarstellung eines Fahrzeuges in stationärer Kurvenfahrt von vorne. Das Fahrzeug insgesamt ist mit dem Bezugszeichen 1 bezeichnet. Sein Aufbau 2 sei gegenüber einer Wankachse W um den Winkel $\Phi$ kippbar. Der Aufbau 2 ist über eine Federung 3 und 3' und Stoßdämpfer 4 und 4' mit Achsen verbunden, von denen die Vorderachse 5 zu sehen ist, an der die Räder 6 und 6' befestigt sind, die auf der Fahrbahn 7 aufliegen (sollten). Da nur die wesentlichen Effekte betrachtet werden sollen, werden vereinfachend folgende Annahmen getroffen:

1) Die Hub- und Nickbewegung können für wankdynamische Betrachtungen vernachlässigt werden,
2) der Schwerpunkt $SP_u$ des Fahrwerks (ungefederte Masse $m_u$) befindet sich in der Fahrbahnebene 7,
3) die Lage der Wankachse W, die sich primär aus der Kinematik der Radaufhängung ergibt, wird als konstant angenommen; die Wankachse W wird als feste Achse in Fahrzeuglängsrichtung in einer Höhe $h_R$ über der Fahrbahn 7 angenommen und
4) der Schwerpunkt des Aufbaus samt Ladung $SP_s$ (zusammengefaßt zur gefederten Masse $m_s$) befindet sich in einer Höhe h über der Wankachse.

Die für die Bestimmung einer Kippbedingung relevanten auf das System wirkenden Kräfte sind die Gravitationskräfte $m_u g$ und $m_s g$, die Reifenaufstandskräfte links $F_{z,L}$ und rechts $F_{z,R}$ (jeweils vorne und hinten zusammengefaßt) sowie die Zentrifugalkraft im Aufbauschwerpunkt $m_s a_{y,s}$. Aus dem Kräftegleichgewicht in vertikaler $z_1$-Richtung und dem Momentengleichgewicht um den Punkt O in Fig. 1 läßt sich die folgende Definition des Kippkoeffizienten ableiten:

$$R = \frac{F_{z,R} - F_{z,L}}{F_{z,R} + F_{z,L}} \tag{1}$$

$$R = \frac{2m_s}{(m_u+m_s)\,T}\left[(h_R + h\cos\phi)\,\frac{a_{y,s}}{g} + h\sin\phi\right] \tag{2}$$

Falls $|R|<1$, so ist das Fahrzeug "kippstabil". Wird dagegen $R=\pm 1$, dann heben die linken bzw. rechten Räder gerade von der Fahrbahn ab. Der Kippkoeffizient ist ein Maß für die Verteilung der Reifenaufstandskräfte zwischen rechts und links. Für eine meßtechnische Erfassung von R muß vorausgesetzt werden, daß entweder entsprechend Gl. (1) die Reifenaufstandskräfte direkt gemessen werden können oder entsprechend Gl. (2) die Höhen h und $h_R$ sowie die Massen $m_s$ und $m_u$ bekannt sind und die Querbeschleunigung $a_{y,s}$ sowie der Wankwinkel $\Phi$ meßbar ist. Soll aus Kostengründen auf eine Messung von $\Phi$ verzichtet werden, so ist es sinnvoll, unter den weiteren Annahmen $m_u \ll m_s$, $\cos\Phi \approx 1$ und $h\sin(\Phi) \ll (h_R+h)a_{y,s}/g$, einen Näherungswert für den Kippkoeffizienten zu verwenden, der durch den Zusammenhang

$$R \approx \frac{2(h_R+h)}{T}\,\frac{a_{y,s}}{g} \tag{3}$$

beschrieben wird. Die Annahme $m_u \ll m_s$ bedeutet auch, daß die Gesamtschwerpunkthöhe mit der Schwerpunkthöhe des Wankaufbaus zusammenfällt. $R_{approx}$ wird bestimmt durch das Verhältnis von Schwerpunkthöhe über der Fahrbahn $h_R+h$ zu halber Spurweite $T/2$ und dem Verhältnis von Querbeschleunigung $a_{y,s}$ zu Gravitationsbeschleunigung g. Dabei ist T die unveränderliche Spurweite (Mittelwert der Spurweiten vorne und hinten), $h_R$ die Höhe der Wankachse über der Fahrbahn die als konstant angenommen werden kann und die Höhe h ein beladungsabhängiger Fahrzeugparameter. Das Querbeschleunigungssignal $a_{y,s}$ ist im einfachsten Fall meßbar durch einen im Aufbauschwerpunkt angebrachten Querbeschleunigungssensor. In der Regel wird man es aus praktischen Gründen vermeiden wollen, dort einen Sensor anzubringen oder eine feste Anbringung ist nicht möglich, da die Schwerpunkthöhe variiert. Dann kann das entsprechende Signal durch Interpolation der Meßwerte zweier z. B. an Boden und Dach des Aufbaus angebrachter Sensoren ermittelt werden. Ein Umkippen des Fahrzeugs ist dann ausgeschlossen, wenn zu jedem Zeitpunkt das Abheben aller Räder verhindert wird. Diese Bedingung läßt sich durch die Ungleichung $|R|<1$ formulieren.

Ziel von Regelungssystemen für eine aktive Kippvermeidung muß es deswegen sein, die Forderung $|R|<1$ zu erfüllen, indem man die Querbeschleunigung in Abhängigkeit von Schwerpunkthöhe und Spurweite in kippkritischen Situationen betragsmäßig auf einen Wert von unter

$$a_{y,max} \approx \frac{T\,g}{2\,(h + h_R)} \qquad (4)$$

begrenzt. Bei allen Fahrzeugen kann man davon ausgehen, daß aufgrund der beschränkten Seitenkräfte der Reifen die Maximalwerte der auftretenden Zentripetalbeschleunigungen $a_{y,max}=(v^2/\varrho)_{max}$, wobei $\varrho$ die Bahnkrümmung ist, unter einem bestimmten Wert bleiben (siehe Mitschke,"Dynamik der Kraftfahrzeuge: Band C", Springer Verlag: Tabelle 8.1, Pkw: $(v^2/\varrho)_{max}\approx 0.73... 0.8g$, Sattel-Kfz:$(v^2/\varrho)_{max}\approx 0.34... 0.36g$, schwere Lkw: $(v^2/\varrho)_{max}\approx 0.35... 0.4g$, leichte Lkw: $(v^2/\varrho)_{max}\approx 0.5... 0.6g$). Fahrzeuge sind dementsprechend nur dann direkt kippgefährdet wenn gilt: $2(h+h_R)\le Tg/(v^2/\varrho)_{max}$. Dies trifft nur auf einige wenige Pkw zu. Bei Sattel-Kfz, leichten und schweren Lkw, Bussen sowie manchen Spezialfahrzeugen (z. B. Geländewagen, Transporter, Wohnmobile) hingegen ist aufgrund des häufig sehr hohen und zudem mit dem Beladungszustand variierenden Aufbauschwerpunkts die Kippgefahr wesentlich präsenter.

Die Begrenzung der Querbeschleunigung des Fahrzeugaufbaus läßt sich mit unterschiedlichen regelungstechnischen Eingriffsmöglichkeiten in die Fahrzeugdynamik erreichen. Dafür ist es zunächst hilfreich, zwischen stationärer Kreisfahrt und instationärer Kreisfahrt zu unterscheiden.

In stationärer Kreisfahrt gilt für die Querbeschleunigung allgemein und damit auch für die Querbeschleunigung im Fahrzeugaufbau der Zusammenhang

$$a_{y,s} = v^2\rho \qquad (5)$$

wobei v die Fahrgeschwindigkeit ist. Will man $a_{y,s}$ reduzieren, so kann man dies tun, indem man durch Bremsen die Fahrgeschwindigkeit v verringert oder durch Lenken bzw. einseitiges Bremsen die Bahnkrümmung $\varrho$ verkleinert bzw. den Bahnradius $1/\varrho$ vergrößert. Dabei ist ein vergleichbarer Effekt durch Verkleinerung der Bahnkrümmung aufgrund der geringen zu bewegenden Vorderrad- und Lenkungsmasse wesentlich schneller zu erzielen als der durch Geschwindigkeitsreduktion durch Verzögerung der gesamten Fahrzeugmasse.

Eine weitere Möglichkeit, die Kippgefahr zu reduzieren, liegt darin, den Fahrzeugaufbau aktiv zum Kurveninneren zu neigen (aktive Gegenneigung). In stationärer Kurvenfahrt bleibt die Querbeschleunigung unberührt durch diesen Regelungseingriff. Die Reduktion der Kippgefahr liegt in dem "Gravitationsterm" $2h\,m_s\sin(\Phi)/(m_u+m_s)/T$ aus Gl. (2) begründet. Beim aktiv gegengeneigten Fahrzeug führt erst eine im Vergleich zum ungeregelten Fahrzeug (um eine entsprechend dem Unterschied im Gravitationsterm) höhere Querbeschleunigung im Fahrzeugaufbau zum Umkippen. Insbesondere bei niedrigen Geschwindigkeiten kann mit aktiver Gegenneigung ein deutlicher Sicherheitsgewinn erzielt werden, d. h. die Kippgrenze wird entsprechend der höheren Zentripetalbeschleunigung die das Fahrzeug aufnehmen kann verschoben. Bei entsprechender Lenkwinkeleingabe, Fahrgeschwindigkeit bzw. Störeinflüssen kann ein Umkippen des Fahrzeugs jedoch nicht generell vermieden werden.

Für dynamische Abweichungen von der stationären Kreisfahrt ist es darüber hinaus möglich, durch aktive Dämpfung bzw. Federung die Wankdämpfung zu verbessern, und damit die Kippgefahr in dynamischen Manövern (z. B. Ausweichmanöver) zu reduzieren. Dieser Effekt wird mit wesentlich geringerem Energie- und Aktuatorikaufwand durch aktives Lenken bzw. aktives einseitiges Bremsen erzielt.

Mittels aktiver Lenkung kann man unmittelbar regulierend in die Querdynamik des Fahrzeugs eingreifen und damit auch effizient in die Wankdynamik. Aufgrund des schnelleren und präziseren Eingriffs, als dies dem Fahrer aufgrund seines eingeschränkten Reaktionsvermögens möglich ist, besteht grundsätzlich ein großes Potential für einen Sicherheitsgewinn. Wegen des geringen Energiebedarfs und Verschleißes ist die aktive Lenkung nicht beschränkt auf fahrdynamisch kritische Situationen, sondern kann auch im Dauerbetrieb verwendet werden, um Sicherheit und Fahrkomfort zu verbessern.

Mit dem erfindungsgemäßen Verfahren werden zwei Ziele verfolgt. Zum einen wird in kippkritischen Situationen über ein Notfallsystem, das aus aktiver Lenkung und aktivem Bremseingriff besteht, stabilisierend in die Fahrdynamik eingegriffen, um ein Umkippen des Fahrzeugs zu verhindern und gleichzeitig ein Spurhalten des Fahrzeugs zu gewährleisten. Zum anderen wird durch eine unterlagerte Lenkregelung im Dauerbetrieb die Wankdynamik bedämpft und damit die Kippstabilität in dynamischen Fahrmanövern erhöht.

Zunächst wird zu Beginn einer jeden Fahrt die Schwerpunkthöhe des Fahrzeugs geschätzt und der Wert gespeichert. Nachdem der Wert feststeht, wird das Regelungssystem eingeschaltet oder das Regelungssystem wird von Anfang an mit einem geeigneten Startwert für die Schwerpunkthöhe bis zum Vorliegen der Schätzung betrieben. In vereinfachter Form lautet die Differentialgleichung für die Wankdynamik:

$$(J_{2,x} + m_2 h^2)\ddot{\phi}(t) + d_\phi \dot{\phi}(t) + (C_\phi - m_2 gh)\phi(t) = m_2 h a_y(t) \tag{6}$$

mit den Anfansgsbedingungen $\phi(0) = \phi_0$ und $\phi(0) = \phi_0$
mit

$J_{2,x}$  Massenträgheitsmoment um die *x-Achse*
$m_2$  Masse des *Aufbaus*
$h$  Höhe des Aufbaus über der Wankachse
$d_\phi$  Summendrehdämpferkonst*ante* (Federbeine)
$C_\phi$  Summendrehfederkonstante *(Federbeine + Stabilisatoren)*
$a_y$  Querbeschleunigung des Fahrwerks
$\phi$  Wankwinkel
$\dot{\phi}$  Wankwinkelgeschwindigke*it* (Wankrate)
$\ddot{\phi}$  Wankwinkelbeschleunigun*g*

Beispielsweise kann bei Vorliegen der Messung von $\Phi$ und ay die Identifikation der Schwerpunkthöhe kann nun beispielsweise dadurch erfolgen, daß man bekannte Parameterschätzmethoden für Differentialgleichungen (R. Isermann, "Identifikation dynamischer Systeme, Band I und II, Springer-Verlag, Berlin, Heidelberg 1988; Kapitel 23) auf obige Differentialgleichung anwendet und damit die Koeffizienten der Gleichung bestimmt. Aus diesen Koeffizienten kann dann die Schwerpunkthöhe ermittelt werden.

Nun erfolgt eine ständige Ermittlung des dynamischen Kippkoeffizienten R des Fahrzeuges in oben beschriebener Weise.

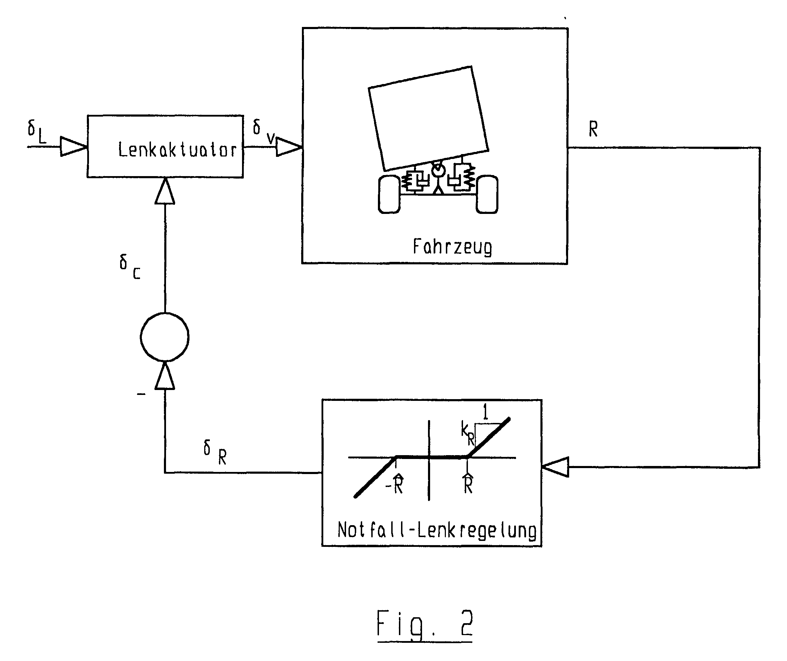

## 5.2 Notfall-Lenkregelung (Fig. 2)

Überschreitet der Kippkoeffizient R betragsmäßig einen vorgegebenen Grenzwert $\hat{R}$ (z. B. $\hat{R}$=0.9), der signalisiert, daß sich das Fahrzeug nahe an der Kippgrenze befindet, wird über ein nichtlineares Regelgesetz ein Lenkeingriff eingeleitet, um unmittelbar die Querbeschleunigung zu reduzieren und damit die Kippstabilität zu vergrößern. Das nichtlineare Regelgesetz bewirkt dabei, daß je näher der Betrag des Kippkoeffizienten dem Wert 1 kommt, desto stärker in die Lenkung eingegriffen wird. Wird der Grenzwert $\hat{R}$ unterschritten, so wird die Notfall-Lenkregelung wieder deaktiviert. Dieser Zusammenhang wird in Gl. (7) beschrieben.

$$\delta = \begin{cases} k_R \, sign(R) \; (|R| - \hat{R}) & f\ddot{u}r \; |R| > \hat{R} \\ 0 & f\ddot{u}r \; |R| \le \hat{R} \end{cases} \tag{7}$$

Der Lenkeingriff bewirkt, daß der Vorderradlenkwinkel reduziert wird und eine Kursabweichung des Fahrzeugs zum Kurvenäußeren in Kauf genommen wird. Der Vermeidung des Umkippens wird kurzfristig Priorität gegenüber der Kurshaltung eingeräumt. Im Extremfall, d. h. bei $|R|$ nahe 1 und idealerweise exakt bestimmtem Kippkoeffizienten R sowie hoher Kennliniensteigung $k_R$, würde das Fahrzeug mit der beschriebenen Notfall-Lenkregelung den engsten Kurvenradius fahren, der physikalisch gerade noch möglich ist, ohne daß die kurveninneren Räder von der Fahrbahn abheben. Der Lenkeingriff (Zusatzlenkwinkel) für die Notfall-Lenkregelung kann dabei abweichend vom Diagramm der Fig. 2 auch gemäß einer Rampenfunktion auf einen Grenzwert beschränkt werden.

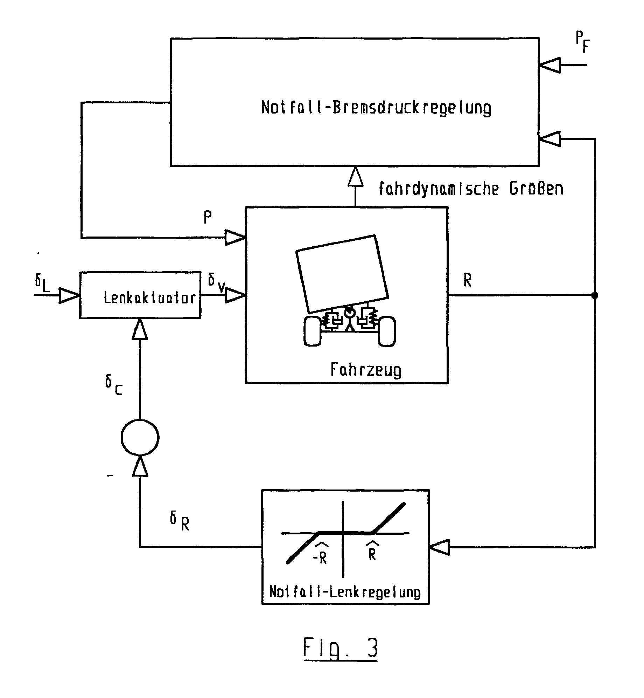

## 5.3 Notfall-Bremsdruckregler (Fig. 3)

Gleichzeitig wird ein Bremseingriff eingeleitet, der in erster Linie dazu dient, die Abweichung vom gewünschten, vom Fahrer vorgegebenen, Kurs klein zu halten und dabei über eine Reduktion der Geschwindigkeit auch mittelbar die Querbeschleunigung zu reduzieren. Beim Abbremsen entsteht durch die Massenträgheit ein Nickmoment. Dadurch wird die Achslast vorne erhöht und hinten um den gleichen Betrag vermindert. Nach dem Abklingen der dynamischen Radlastschwankungen sind die Schräglaufwinkel an den Rädern vorne und hinten unterschiedlich stark angewachsen und zwar hinten stärker als vorne. Durch die Vergrößerung der Schräglaufwinkel hinten wird eine Gierdrehung und eine Kursabweichung des Fahrzeugs zur Kurveninnenseite verursacht (siehe M. Mitschke "Dynamik der Kraftfahrzeuge: Band C", S. 236 ff). Ein weiterer Effekt, den man berücksichtigen muß, ist das unter- bzw. übersteuernde Verhalten des Fahrzeugs. Wird bei untersteuerndem Verhalten (Regelfall) die Fahrgeschwindigkeit und damit die Zentripetalbeschleuigung langsam (quasistationär) reduziert, so muß der Vorderradlenkwinkel zurückgenommen werden, um auf dem vorgesehenen Kreisradius zu bleiben (siehe M. Mitschke "Dynamik der Kraftfahrzeuge: Band C", S. 40). Um dies im Regelgesetz zu berücksichtigen, müssen Kenntnisse über das Eigenlenkverhalten des Fahrzeugs einfließen.

Ziel ist es, den Bremseingriff möglichst genau so zu dosieren, daß die Kursabweichung gegenüber dem vom Fahrer gewünschten Kurs verschwindet. Der Lenk- und Bremseingriff wird daher so abgestimmt, daß eine Kurshaltung innerhalb einer gewissen Toleranz gewährleistet wird. Dabei kann gemäß der bekannten Fahrdynamikregelung auch eine gezielte Bremsung einzelner Räder (z.B nur kurvenäußeres Hinterrad bei übersteuerndem Fahrzeug) oder Gruppen von Rädern vorgenommen werden, was nur geringen Einfluß auf die Verringereung der Fahreuggeschwindiggkeit hat, dagegen einen verhältnismäßig großen Einfluß auf die Gier- und Querdynamik und damit auch mittelbar auf die Wankdynamik.

Wird der Grenzwert $\hat{R}$ unterschritten, so werden Lenk- und zusätzlicher Bremseingriff deaktiviert. Der Grenzwert $\hat{R}$ kann auch variabel sein und von Fahrzustandsgrößen wie beispielsweise Fahrgeschwindigkeit oder Lenkradwinkelgeschwindigkeit sowie von der Zuverlässigkeit geschätzter Fahrzeugparameter abhängig gemacht werden. Die Steigung der nichtlinearen Kennlinie $k_R$ wird möglichst groß gewählt, um einen schnellen und effizienten Eingriff zu gewährleisten, ohne daß jedoch Grenzzyklen, d.h. ungewollte Schwingungen, entstehen können. Der maximale Wert für $k_R$, hängt vor allem von der Bandbreite des Lenkaktuators ab. $k_R$ wird entweder als konstant angenommen, oder aber auch an Fahrgeschwindigkeit ($k_R=k_R(v)$) oder an Fahrgeschwindigkeit und Schwerpunkthöhe (Schwerpunkthöhe des Wankaufbaus über der Wankachse) angepaßt, d. h. $k_R=k_R(v,h)$.

Die Einleitung des Bremseingriffs erfolgt einer Notfallbremsung entsprechend möglichst schnell. Wird der Grenzwert $\hat{R}$ überschritten, so wird das Fahrzeug mit einer dem Bremsdruck $p_{max}$ entsprechenden Bremskraft abgebremst. Der Bremsdruck $p_{max}$ kann dabei der maximale Bremsdruck sein, der durch das ABS an den einzelnen Rädern begrenzt wird, oder aber auch von weiteren fahrdynamischen Größen, wie beispielsweise Fahrgeschwindigkeit, Gierrate und der daraus ermittelten Fahrbahnkrümmung, Lenkradwinkel und geschätzten Fahrzeugparametern wie beispielsweise dem Kraftschluß zwischen Reifen und Fahrbahn zur Bestimmung des momentanen Eigenlenkverhaltens, abhängen. Wird der Grenzwert $\hat{R}$ wieder unterschritten, so wird der Bremseingriff deaktiviert. Dies kann beispielsweise durch die in Gl. (8) beschriebene Schaltfunktion bewerkstelligt werden.

$$p = \left(\begin{array}{ll} 0 & f\ddot{u}r \ \left| \ R \ \right| \ \leq \ \hat{R} \\ p_{max} & f\ddot{u}r \ \left| \ R \ \right| \ > \ \hat{R} \end{array}\right. \qquad (8)$$

Alternativ hierzu kann in einer etwas aufwendigeren Variante über eine dynamische Kennlinie zwischen abnehmender Kippstabilität ($R\ sign(R)>0$) und zunehmender Kippstabilität ($R\ sign(R)<0$) differenziert werden. Bei abnehmender Kippstabilität soll möglichst massiv in die Bremsen eingegriffen werden, bei zunehmender Kippstabilität soll der Bremsdruck zurückgenommen werden, wie beispielsweise durch den dynamischen Zusammenhang in Gl. (9) beschrieben wird.

$$p = \left\{\begin{array}{ll} 0 & f\ddot{u}r\ |R| \ \leq \ \hat{R} \\ p_{max} & f\ddot{u}r\ |R| > \ \hat{R} \quad \wedge \quad \dot{R}\ sign(R) > 0 \\ \dfrac{|R|-\hat{R}}{\overline{R}-\hat{R}}\ p_{max} & f\ddot{u}r\ |R| > \hat{R} \quad \wedge \quad \dot{R}\ sign(R) < 0 \end{array}\right. \qquad (9)$$

Auch bei dieser Kennlinie wird bei Unterschreiten des Grenzwertes $\hat{R}$ der zusätzliche Bremseingriff deaktiviert, jedoch wird der Bremsdruck nach Überschreiten des betragsmäßigen Maximums $\overline{R}$ für R kontinuierlich zurückgenommen. Hierfür ist es notwendig, den Wert des Maximums $\overline{R}$ zu speichern. Vorteilhaft bei dieser Variante ist, daß die Lastwechselreaktion durch das kontinuierliche Zurücknehmen des Bremsdrucks nicht so ausgeprägt wie bei der Variante nach Gl. (8).

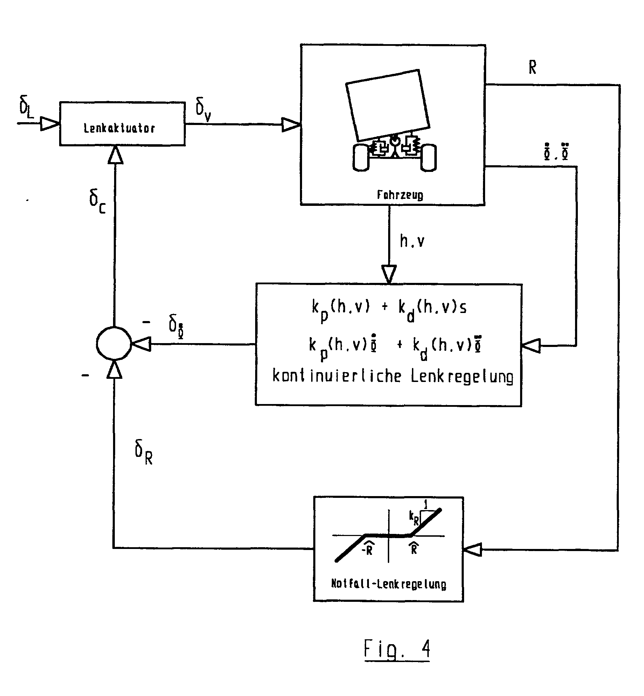

5.4 <u>Kontinuierlich betriebener Lenkregler (Fig. 4)</u>

Dem in den Abschnitten 5.1 und 5.2 beschriebenen Notfall-system ist ein zusätzlicher permanenter Lenkeingriff unterlagert, der die Wank- bzw. Kippstabilität durch eine Vergrößerung der Wankdämpfung erhöht. Dabei erfolgt zunächst eine Identifikation der Schwerpunkthöhe des Fahrzeugs zu Beginn einer Fahrt wie oben beschrieben. Die Ermittlung der Fahrgeschwindigkeit des Fahrzeugs und der Wankbeschleunigung und der Wankrate des Fahrzeugaufbaus gegenüber dem Fahrwerk erfolgt ständig. Das Regelgesetz sieht vor, Wankrate und Wankbeschleunigung mit an die Fahrgeschwindigkeit oder Fahrgeschwindigkeit und Schwerpunkthöhe angepaßten Reglerverstärkungen proportional auf die Vorderradlenkung zurückzuführen. Mit dieser Verstärkungsanpassung wird erreicht, daß für jede Fahrgeschwindigkeit und beladungsabhängige Schwerpunkthöhe die Rückführung so eingestellt wird, daß die Wankdämpfung signifikant verbessert wird und gleichzeitig das geregelte Fahrzeug in seiner Quer-, Gier- und Wankdynamik nicht langsamer (träger) wird als das ungeregelte Fahrzeug. Darüber hinaus wird sichergestellt, daß Quer-, Gier- und Wankstörungen, wie sie z. B. bei Seitenwind oder μ-split-Bremsung auftreten, im für die Fahrdynamik relevanten Frequenzbereich reduziert werden. Mit der Verbesserung der Wankdämpfung wird die Kippstabilität in dynamischen Fahrmanövern, wie beispielsweise bei instationärer Kurvenfahrt, Spurwechsel-, überhol- oder Ausweichmanövern, erhöht. Bei quasistationären Manövern sind Wankrate und Wankbeschleunigung klein und der kontinuierlich betriebene Lenkregler beeinflußt nur unwesentlich das Fahrverhalten.

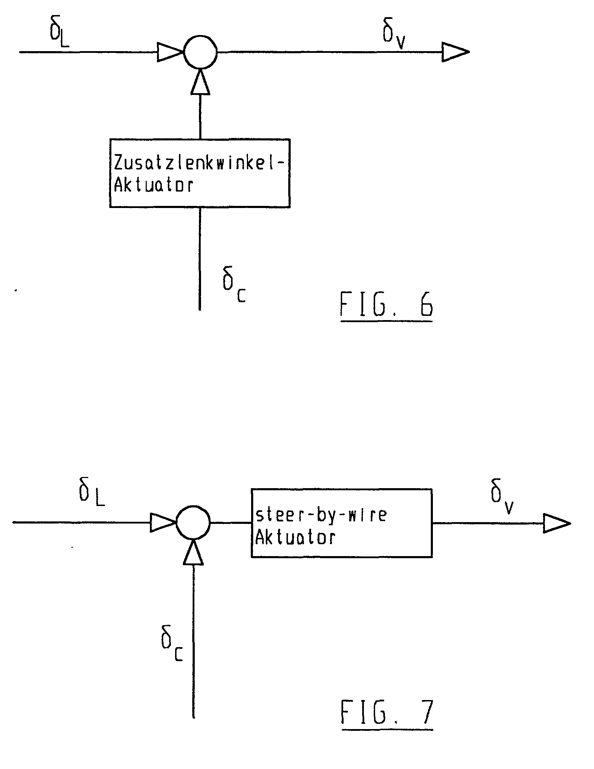

Notfall- und kontinuierliche Lenkregelung können sowohl über eine Additionslenkung (siehe Fig. 6) als auch über eine steer-by-wire-Lenkung (siehe Fig. 7) implementiert werden.

**Patentansprüche**

1. Verfahren zur Reduktion der Kippgefahr von Kraftfahrzeugen mit folgenden Arbeitsschritten:

   a) ständiges Ermitteln eines Kippkoeffizienten (R) des Kraftfahrzeuges durch eine Messung der Reifenaufstandskräfte und Vergleich des ermittelten Kippkoeffizienten mit einem vorgegebenen Grenzwert ($\hat{R}$),

   b) bei Überschreiten des vorgegebenen Grenzwertes ($\hat{R}$) wird automatisch ein Lenkeingriff eingeleitet,

   c) der mit abnehmender Kippstabilität zunimmt und

   d) der mit zunehmender Kippstabilität reduziert oder zumindest konstant gehalten wird.

2. Verfahren zur Reduktion der Kippgefahr von Kraftfahrzeugen mit folgenden Arbeitsschritten:

   a) ständiges Ermitteln eines Kippkoeffizienten (R) des Kraftfahrzeuges über eine Messung von Signalen und eine Datenverarbeitung, die der Berechnung der Schwerpunkthöhe des Fahrzeugs und der Querbeschleunigung im Schwerpunkt dienen, und Vergleich des ermittelten Kippkoeffizienten mit einem vorgegebenen Grenzwert ($\hat{R}$),

   b) bei Überschreiten des vorgegebenen Grenzwertes ($\hat{R}$) wird automatisch ein Lenkeingriff eingeleitet,

   c) der mit abnehmender Kippstabilität zunimmt und

   d) der mit zunehmender Kippstabilität reduziert oder zumindest konstant gehalten wird.

3. Verfahren nach einem der Ansprüche 1 oder 2, **dadurch gekennzeichnet, daß** nach betragsmäßigem Überschreiten des Kippkoeffizienten (R) über den Grenzwert ($\hat{R}$) die Differenz zwischen diesen Größen mit einer vorgegebenen Verstärkung ($k_R$) zurückgeführt wird, wobei diese Verstärkung ($k_R$) entweder eine vorgegebene Konstante oder eine vorgegebene Funktion der Fahrgeschwindigkeit und/oder der Schwerpunkthöhe ist.

4. Verfahren nach einem der Ansprüche 1-3, **dadurch gekennzeichnet, daß** der Kippkoeffizient über eine Kennliniennichtlinearität auf den Lenkwinkel zurückgeführt wird, wobei die Kennliniennichtlinearität so festgelegt ist, daß in kipp-unkritischen Situationen die Aktuatorik deaktiviert ist.

**5.** Verfahren nach einem der Ansprüche 1-4 , **dadurch gekennzeichnet,**
**daß** zusätzlich bei Überschreiten eines kritischen Wertes des Kippkoeffizienten eine Bremsdruckregelung aktiviert wird und über einen Bremsaktuator aktiv in die Längsdynamik des Kraftfahrzeugs eingegriffen wird.

**6.** Verfahren nach einem der Ansprüche 1-5, **dadurch gekennzeichnet,**
**daß** zur Verbesserung der Wankdämpfung zusätzlich die Wankwinkelgeschwindigkeit und/oder die Wankwinkelbeschleunigung proportional auf den Lenkwinkel zurückgeführt werden.

**7.** Verfahren nach Anspruch 6, **dadurch gekennzeichnet,**
**daß** die Wankwinkelgeschwindigkeit und/oder die Wankwinkelbeschleunigung mit an die Fahrgeschwindigkeit und/oder Schwerpunkthöhe angepaßten proportionalen Reglerverstärkungen, die vorab ermittelt wurden, zurückgeführt werden.

**8.** Verfahren nach einem der Ansprüche 1-7, **dadurch gekennzeichnet,**
**daß** der Lenkeingriff auf den Vorderrad- und/oder den Hinterradlenkwinkel einwirkt.

**9.** Verfahren nach einem der Ansprüche 5-7, **dadurch gekennzeichnet,**
**daß** die Bremsdruckregelung den Bremsdruck für jedes Rad oder eine Gruppe von Rädern einer Seite der Fahrzeuge individuell regelt.


**Claims**

**1.** A method for reducing the risk of rollover in motor vehicles, having the following operating steps:

a) constantly determining a rollover coefficient (R) of the motor vehicle by measuring the tyre contact forces and comparing the rollover coefficients determined with a predetermined limit value ($\check{R}$),

b) automatically initiating steering intervention if the predetermined limit value ($\check{R}$) is exceeded,

c) the steering intervention being increased as the rollover stability decreases and

d) the steering intervention being reduced or at least maintained at a constant level as the rollover stability increases.

**2.** A method for reducing the risk of rollover in motor vehicles, having the following operating steps:

a) constantly determining a rollover coefficient (R) of the motor vehicle by way of signal measurement and data processing, which serve to calculate the centre of gravity height of the vehicle and the transverse acceleration in the centre of gravity, and comparing the rollover coefficients determined with a predetermined limit value ($\check{R}$),

b) automatically initiating steering intervention if the predetermined limit value ($\check{R}$) is exceeded,

c) the steering intervention being increased as the rollover stability decreases and

d) the steering intervention being reduced or at least maintained at a constant level as the rollover stability increases.

**3.** A method according to one of Claims 1 and 2, **characterised in that**, after the rollover coefficient (R) has exceeded the limit value ($\check{R}$) by a certain amount, the difference between these values is reduced by a predetermined reinforcement ($k_R$), this reinforcement ($k_R$) being either a predetermined constant or a predetermined function of the travelling speed and/or the centre of gravity height.

**4.** A method according to one of Claims 1-3, **characterised in that** the rollover coefficient is reduced depending on the steering angle by way of a non-linear characteristic, the non-linear characteristic being specified such that the actuator technology is deactivated in situations which are non-critical for rollover.

5.  A method according to one of Claims 1-4, **characterised in that** a brake pressure control is additionally activated if a critical value of the rollover coefficient is exceeded, and there is active intervention in the longitudinal dynamics of the motor vehicle by way of a brake actuator.

6.  A method according to one of Claims 1-5, **characterised in that**, to improve the damping of the rolling motion, the angular velocity and/or the angular acceleration of the rolling motion is/are additionally reduced proportionally to the steering angle.

7.  A method according to Claim 6, **characterised in that** the angular velocity and/or the angular acceleration of the rolling motion are reduced by previously determined proportional control reinforcements which are adapted to the travelling speed and/or the centre of gravity height.

8.  A method according to one of Claims 1-7, **characterised in that** the steering intervention acts on the steering angle of the front wheel and/or the steering angle of the rear wheel.

9.  A method according to one of Claims 5-7, **characterised in that** the brake pressure control controls the brake pressure individually for each wheel or a group of wheels on one side of the vehicle.

**Revendications**

1.  Procédé pour réduire le risque de basculement des véhicules routiers, avec les étapes suivantes :

    a) détermination permanente d'un coefficient de basculement (R) du véhicule routier par une mesure des forces de contact des pneumatiques, et comparaison entre le coefficient de basculement déterminé et une valeur limite prédéfinie ($\hat{R}$),

    b) en cas de dépassement de la valeur limite prédéfinie ($\hat{R}$), une intervention de direction est automatiquement introduite,

    c) ladite intervention de direction augmentant quand la stabilité au basculement diminue et

    d) étant réduite ou au moins maintenue constante quand la stabilité au basculement augmente.

2.  Procédé pour réduire le risque de basculement des véhicules routiers, avec les étapes suivantes :

    a) détermination permanente d'un coefficient de basculement (R) du véhicule routier par une mesure de signaux et un traitement de données, qui servent à calculer la hauteur du centre de gravité du véhicule et l'accélération transversale dans le centre de gravité, et comparaison entre le coefficient de basculement déterminé et une valeur limite prédéfinie ($\hat{R}$),

    b) en cas de dépassement de la valeur limite prédéfinie ($\hat{R}$), une intervention de direction est automatiquement introduite,

    c) ladite intervention de direction augmentant quand la stabilité au basculement diminue et

    d) étant réduite ou au moins maintenue constante quand la stabilité au basculement augmente.

3.  Procédé selon l'une des revendications 1 ou 2, **caractérisé en ce que**, après dépassement quantitatif du coefficient de basculement (R) au-dessus de la valeur limite ($\hat{R}$), la différence entre ces grandeurs est diminuée par un gain prédéfini ($k_R$), ce gain ($k_R$) étant soit une constante prédéfinie, soit une fonction prédéfinie de la vitesse de roulage et/ou de la hauteur du centre de gravité.

4.  Procédé selon l'une des revendications 1 à 3, **caractérisé en ce que** le coefficient de basculement est lié à l'angle de braquage au moyen d'une non-linéarité de courbes caractéristiques, laquelle est fixée de telle sorte que dans des situations non critiques sous l'aspect du basculement le système d'actionneurs est désactivé.

**5.** Procédé selon l'une des revendications 1 à 4, **caractérisé en ce que**,
en plus, en cas de dépassement d'une valeur critique du coefficient de basculement, une régulation de la pression de freinage est activée et est intégrée activement dans la dynamique longitudinale du véhicule routier au moyen d'un actionneur de frein.

**6.** Procédé selon l'une des revendications 1 à 5, **caractérisé en ce que**,
en plus, pour améliorer l'amortissement du roulis, la vitesse angulaire de roulis et/ou l'accélération angulaire de roulis sont proportionnellement liées à l'angle de braquage.

**7.** Procédé selon la revendication 6, **caractérisé en ce que**
la vitesse angulaire de roulis et/ou l'accélération angulaire de roulis sont diminuées par des gains de régulateur proportionnels adaptés à la vitesse de roulage et/ou à la hauteur du centre de gravité et qui ont été déterminés avant.

**8.** Procédé selon l'une des revendications 1 à 7, **caractérisé en ce que**
l'intervention de direction agit sur l'angle de braquage des roues avant et/ou des roues arrière.

**9.** Procédé selon l'une des revendications 5 à 7, **caractérisé en ce que**
la régulation de la pression de freinage règle la pression de freinage individuellement pour chaque roue ou pour un groupe de roues d'un côté des véhicules.

$$\underline{F \, i \, g \, . \quad 1}$$

$\delta_L$

Lenkaktuator

$\delta_C$

$\delta_V$

Fahrzeug

R

$\delta_R$

Notfall-Lenkregelung

Fig. 2

$$\underline{Fig.\ 3}$$

$$\underline{\text{Fig. 4}}$$

Fig. 5

$\delta_L$

$\delta_V$

Zusatzlenkwinkel-
Aktuator

$\delta_C$

FIG. 6

$\delta_L$

steer-by-wire
Aktuator

$\delta_V$

$\delta_C$

FIG. 7

$P_F$

R

fahrdynamische Größen

Sollwertberechnung
für den Bremsdruck

Bremsaktuator

$\hat{R}$

$-\hat{R}$

Notfallbremsdruckregelung

P

Fig. 8